Europäisches Patentamt

European Patent Office

Office européen des brevets

(11) Veröffentlichungsnummer: **0 353 425**
**A2**

(12) # EUROPÄISCHE PATENTANMELDUNG

(21) Anmeldenummer: 89110459.8

(22) Anmeldetag: 09.06.89

(51) Int. Cl.⁴: **A47J 31/54 , A47J 31/057**

(30) Priorität: 23.07.88 DE 3825166

(43) Veröffentlichungstag der Anmeldung:
**07.02.90 Patentblatt 90/06**

(84) Benannte Vertragsstaaten:
**AT CH DE FR GB IT LI**

(71) Anmelder: **Braun Aktiengesellschaft**
**Rüsselsheimer Strasse 22**
**D-6000 Frankfurt/Main(DE)**

(72) Erfinder: **Wunder, Dieter**
**Kirchstrasse 9**
**D-6361 Reichelsheim 6(DE)**

(54) **Elektrischer Durchlauferhitzer für eine Getränkezubereitungsmaschine.**

(57) Elektrischer Durchlauferhitzer (2) für eine Getränkezubereitungsmaschine, der mindestens einer Heizung (8) und mindestens einem eine Höhendifferenz zwischen Wassereinlauf (14) und Wasserauslauf (16) aufweisenden, zum Aufheizen von Wasser dienenden Wasserkanal (12) beinhaltet. Der Wasserkanal (12) verläuft im eingebauten Zustand des Durchlauferhitzers (2) im wesentlichen horizontal und weist einen mit dem gegenüber dem Durchlauferhitzer höher gelegenen Wassertank in Verbindung stehenden Wassereinlauf (22) und einen mit einem gegenüber dem Durchlauferhitzer 82) höher gelegenen Ausflußrohr in Verbindung stehenden Wasserauslauf (24) auf. Beim Erhitzen des Wassers im Durchlauferhitzer (2) wird das Wasser bei besonders guter Ausnutzung der Heizenergie vom Wassertank zum Ausflußrohr gefördert. Ebenso verhindert die Anordnung nach Beendigung des Brühvorgangs ein Zurückbleiben von Restwasser im Durchlauferhitzer (2).

FIG.1

EP 0 353 425 A2

## Elektrischer Durchlauferhitzer für eine elektrische Getränkezubereitungsmachine

Die Erfindung bezieht sich auf einen elektrischen Durchlauferhitzer für eine Getränkemaschine, mit mindestens einer Heizung und mindestens einem eine Höhendifferenz zwischen Wassereinlauf und Wasserauslauf aufweisenden, zum Aufheizen von Wasser dienenden Wasserkanal, der im eingebauten Zustand des Durchlauferhitzers im wesentlichen horizontal verläuft und der einen mit einem gegenüber dem Durchlauferhitzer höher gelegenen Wassertank in Verbindung stehenden Wassereinlauf und einen mit einem gegenüber dem Durchlauferhitzer höher gelegenen Ausflußrohr in Verbindung stehenden Wasserauslauf aufweist, wobei beim Erhitzen des Wassers im Durchlauferhitzer das Wasser vom Wassertank zum Ausflußrohr gefördert wird.

Es ist bereits eine Haushaltsmaschine zur Herstellung von Kaffee bzw. Tee bekannt (DE-A 20 10 675), die im wesentlichen aus einem Wasserbehälter, einem Durchlauferhitzer, einem Filter und einem unter den Filter stellbaren Getränkebehälter besteht. Weiterhin sind Leitungen zum Überführen des Wassers aus dem Wasserbehälter in den Getränkebehälter vorhanden. Zwischen den Leitungen ist der beim Erhitzen des Wassers auch als Pumpe dienende Durchlauferhitzer angeordnet, dessen Pumpleistung durch die aufsteigenden Dampfblasen beim Kochvorgang erzeugt wird. Der Wasserbehälter besteht aus zwei Kammern, denen jeweils eine Fördereinrichtung bzw. ein Trakt einer Fördereinrichtung zugeordnet ist, durch die das Wasser aus der einen Kammer zum Brühgut und das Wasser aus der anderen Kammer unter Umgehung des Brühgutes unmittelbar in den Getränkebehälter förderbar ist. Eine derartige Haushaltsmaschine ist sehr aufwendig und teuer.

Darüber hinaus ist eine elektrische Kaffeemaschine mit einem unterhalb einer Abstellplatte für eine Kaffeekanne angeordneten, plattenförmigen Durchlauferhitzer für das Brühwasser eines offenen Filtersystems bekannt (DE-C2 24 37 775), in dem der Wasserkanal in der horizontalen Ebene verläuft. An dem U-förmigen Wasserkanal liegt mit Wärmekontakt radial außerhalb ein zum Wasserkanal parallel verlaufender Rohrheizkörper an. Die obere Begrenzungsfläche des Wasserkanals steigt kontinuierlich vom Wassereinlauf bis zum Wasserauslauf an, so daß in Strömungsrichtung sich der Querschnitt des Wasserkanals vergrößert. Dadurch sollen Schnorchelgeräusche vermieden und ein gleichmäßiger Wasserlauf erreicht werden.

Bei diesem Durchlauferhitzer ist es als weniger vorteilhaft anzusehen, daß im ansteigenden Wasserkanal Restwasser zurückbleiben kann, so daß ein Korrodieren des Wasserkanals nach längerem Gebrauch eintreten kann. Weiterhin können sich in dem abgestandenen Wasser im Wasserkanal Bakterien und Schmutzreste bilden bzw. ablagern, die dann beim nächsten Gebrauch der Getränkemaschine in das Brühgetränk gelangen können.

Der Erfindung liegt die Aufgabe zugrunde, die Führung des Kanals eines Durchlauferhitzers bei platzsparender Anordnung der Heizung so zu gestalten, daß eine wirkungsvolle und rasche Aufheizung bei gutem Wirkungsgrad entsteht und daß bei einem abgeschlossenen Heizvorgang die Kanäle frei von Restwasser sind und dadurch keine Verunreinigungen im Kanal entstehen können.

Erfindungsgemäß wird diese Aufgabe dadurch gelöst, daß daß der Wasserkanal vom Wassereinlauf zum Wasserauslauf ein Gefälle aufweist. Hierdurch wird sichergestellt, daß nach einem abgeschlossenen Brühvorgang sämtliches Restwasser aus dem Wasserkanal verdampfen und/oder ablaufen kann, so daß ein Korrodieren und eine Verunreinigung des vorzugsweise aus Kupfer oder Aluminium beste henden Wasserkanals vermieden wird. Durch die Erfindung wird weiterhin die gleichmäßige Förderung des Brühwassers in den Filter begünstigt. Dies ist insbesondere dann der Fall, wenn der Querschnitt des Wasserkanals vom Wassereinlauf zum Wasserauslauf zunimmt, da der sich beim Erhitzen des Wassers im Durchlauferhitzer bildende Dampf in seinem Volumen zunimmt und somit eine Behinderung für das Wasser nicht darstellt.

Um besonders schnell ein kaltes Getränk wie Milch, Kakao etc. aufwärmen zu können, ist es bereits bei Expresso-Maschinen bekannt, Dampf in das Getränk einströmen zu lassen. Nach einem weiteren Erfindungsgedanken wird nun ein Durchlauferhitzer vorgeschlagen, bei dem zusätzlich zum Wasserkanal ein zum Erzeugen von Dampf dienender Dampfkanal vorgesehen ist, der ein vom Auslauf zum Einlauf ausgebildetes Gefälle aufweist. Nach der Erfindung verläuft also das Gefälle des Dampfkanals gerade umgekehrt zum Lauf des Wassers im Wasserrohr. Bei der Förderung des zu verdampfenden Wassers in einem derart ansteigenden Dampfrohr wird der Naßdampfanteil (überhitzter Dampf) sehr gering gehalten, so daß Wärmeverluste bei dieser optimalen Verdampfung sehr klein sind. Besonders gleichmäßige Dampfwerte werden erreicht, wenn der Dampfkanal vom Einlaß zum Auslaß kontinuierlich ansteigt. Vorteilhaft ist es auch, wenn zur Förderung des Wassers eine Zwangsförderanlage dem Durchlauferhitzer vor- bzw. nachgeschaltet ist.

Um den Naßdampfanteil noch mehr zu reduzieren, hat es sich als besonders vorteilhaft erwiesen, wenn der Querschnitt des Dampfkanals vom Einlauf zum Auslauf abnimmt. Hierdurch wird die Bauhöhe des Wassererhitzers klein gehalten.

Damit das Wasser im Wasserkanal besonders gleichmäßig aufgeheizt werden kann, also der Wasserkanal besonders lang ausgebildet ist, und gleichzeitig noch in ausreichender Menge Dampf erzeugt werden kann, ist in einer Weiterbildung der Erfindung vorgesehen, daß der Wasserkanal, der Dampfkanal und die Heizung konzentrisch zueinander verlaufen und daß der Wasserkanal radial außerhalb der Heizung und der Dampfkanal radial innerhalb der Heizung kreisförmig verläuft. Diese Anordnung ermöglicht eine besonders gleichmäßige Wärmebeaufschlagung des Wasser- und Dampfkanals, da für das Aufheizen des Wassers viel mehr Energie als für die Verdampfung von geringen Wassermengen im Dampfkanal benötigt wird.

Um die Wärmebeaufschlagung des zu erhitzenden Wassers weiter zu erhöhen, ist es vorteilhaft, wenn zusätzlich zur ersten Heizung mindestens eine weitere Heizung vorgesehen ist und daß die Heizungen ringförmig verlaufen. Der ringförmige Verlauf der Heizungen ermöglicht eine besonders flache Bauweise des Wassererhitzers und erlaubt eine leichte Integration der Heizungen in den Wassererhitzer, wenn er aus Aluminium gegossen wird.

Um die Herstellung des Durchlauferhitzers zu vereinfachen, sind die Heizungen kreis- bzw. U-förmig ausgebildet, verlaufen übereinander und weisen etwa den gleichen Durchmesser auf. Da ein derartiger Durchlauferhitzer in der Regel aus Aluminium gegossen bzw. gespritzt wird, ist es vorteilhaft, wenn die Heizungen symmetrisch ausgebildet sind, damit sie beim Gieß- bzw. Spritzvorgang mit in die Form eingelegt werden können.

Es ist besonders vorteilhaft, daß die Heizung ringförmig ausgebildet ist, daß der Mantel der Heizung aus Aluminium besteht, daß die Heizung während der Herstellung des im Spritzgußverfahren gegossenen Gehäuses mit eingesetzt ist und daß das Gehäuse ebenfalls aus Aluminium besteht. Hierdurch entsteht eine innige Verbindung zwischen der Heizung und dem Gehäuse, da aufgrund der gleichen Werkstoffe und somit der gleichen Schmelztemperatur der Oberflächenbereich der Heizung in das flüssige Metall des Gehäuses einfließt. Hierdurch wird ein besonders gleichmäßiger Wärmedurchgang an dem Durchlauferhitzer erzielt.

Um eine ausreichende Verdampfung im Dampfkanal zu erreichen, verläuft der Einlaß des Dampfkanals zunächst von außen bis etwa zur Mitte des Durchlauferhitzers und gelangt von dort in mehreren, konzentrisch zur Mitte und radial hintereinander verlaufenden Abschnitten zum Auslaß. Durch diese Anordnung wird weiterhin ermöglicht, daß die Auslässe des Dampf- und des Wasserkanals sowie die Anschlüsse der Hiezungen nur auf einer Seite des Wassererhitzers ausgebildet sind. Dies erleichtert die Montage der Anschlüsse und vereinfacht die Ausgestaltung des Gehäuses der Getränkezubereitungsmaschine. Weiterhin wird durch den stets sich umkehrenden Verlauf des Dampfkanals eine optimale Verdampfung erreicht, da die Dampfgeschwindigkeit hierdurch herabgesetzt und die Wärmebeaufschlagung des Dampfes gleichzeitig erhöht wird. Besonders einfach läßt sich ein derartiger Dampfkanal herstellen, wenn die Abschnitte in Draufsicht auf den Durchlauferhitzer nierenförmig ausgebildet sind.

Damit eine besonders einfache Herstellung des Wassererhitzers durch Gießen ermöglicht wird, sind die Heizungen in dem von den Kanälen gebildeten Gehäuse integriert, und die Kanäle sind nach oben hin offen und werden durch einen Deckel bzw. durch eine Abstellplatte verschlossen. Der Deckel kann hierbei mit den einzelnen Wandungen dichtend verstemmt, verlötet, verklebt, verschraubt oder mit ähnlichen Befestigungs- oder Dichtmitteln dichtend befestigt sein.

Eine Vergrößerung des Querschnitts der einzelnen Kanäle läßt sich dadurch erreichen, daß zwei Durchlauferhitzer ohne Deckel spie gelbildlich aufeinandersetzbar und dichtbar sind und daß die Wasserein- und ausläufe und die Heizungen derart miteinander verbunden werden, daß wiederum ein einziger Durchlauferhitzer entsteht. Die Verbindung der beiden Wassererhitzerhälften erfolgt durch Löten, Kleben, Schweißen, Verschrauben oder mit ähnlichen bekannten Befestigungs-Dichtmitteln.

Die einzelnen Heizspiralen können einzeln, gemeinsam, parallel oder in Reihe betrieben werden, so daß durch einfaches Umschalten mittels eines Mehrfachschalters die Heizung von 110 V auf 220 V eingestellt werden kann. Die einzelnen Kanäle zur Aufnahme des Wassers bzw. des Dampfes können ringförmig, mäanderförmig oder zick-zackförmig verlaufen. Ebenso ist es möglich, die Dampfkanäle nebeneinander bzw. übereinander anzuordnen. Außerdem ist es möglich, die einzelnen Heizspiralen nebeneinander, übereinander oder versetzt zueinander im Gehäuse des Wassererhitzers vorzusehen.

Um die Energie bei Verwendung nur einer Heizung zum Erhitzen des Wassers besonders gut ausnützen zu können, ist in einer Weiterbildung der Erfindung vorgesehen, daß auf der einen Seite des Wassererhitzers die Wasserkanäle und auf der anderen Seite des Wassererhitzers die Dampfkanäle ausgebildet sind und daß zwischen den Wasser- und Dampfkanälen die Heizung ausgebildet ist. Durch diese einfache Anordnung ist es möglich, mit nur einer Heizung sowohl das Wasser für ein Getränk zu erhitzen, als auch den Dampf für ein aufzuheizendes Getränk zu erzeugen. Gute Wärmeübergänge werden erreicht, wenn die Heizung beim Gießvorgang des Durchlauferhitzers mit eingegossen wird.

Um den Dampf mit hohem Druck in die Atmosphäre, also in das Getränk einströmen zu lassen, ist in einer Weiterbildung der Erfindung vorgesehen, daß am Dampfauslaß eine Düse vorgesehen ist.

Um bei möglichst kleiner Druckänderung eine hohe Austrittsgeschwindigkeit und Temperatur des Dampfes zu erreichen hat sich gezeigt, daß die Düse an dem zur Erhitzung eines Getränks eintauchenden Ende vorgesehen ist, daß sich der Querschnitt der Düse zum freien Ende hin kegelförmig verjüngt und daß die Mantelfläche des Kegels einen Winkel von 16° bis 20° einschließt.

Es ist aber auch möglich, den Querschnitt des Dampfkanals so eng zu bemessen, daß hierdurch eine ausreichende Dampfmenge erzeugt wird.

Im folgenden wird die Erfindung anhand von mehreren, in der Zeichnung dargestellten Ausführungsbeispielen näher erläutert. Es zeigen:

Fig. 1 eine Draufsicht eines erfindungsgemäßen Durchlauferhitzers mit einem im Querschnitt rechteckigen und ringförmig verlaufenden Wasserkanal und einem konzentrisch angeordneten, dampfbildenden Kanal sowie einer dazwischen liegenden elektrischen Heizung,

Fig. 2 einen Schnitt entlang der Linie A-A gemäß Fig. 1,

Fig. 3 eine Vorderansicht eines weiteren Wassererhitzers,

Fig. 4 eine Vorderansicht eines weiteren Ausführungsbeispiels eines Durchlauferhitzers mit zwei spiegelförmig zueinander angeordneten, über Schraubenbolzen oder Klammern miteinander verbindbaren Durchlauferhitzern und

Fig. 5 ein weiteres Ausführungsbeispiel eines Durchlauferhitzers mit unterhalb der Kanäle vorgesehener Heizspiralen.

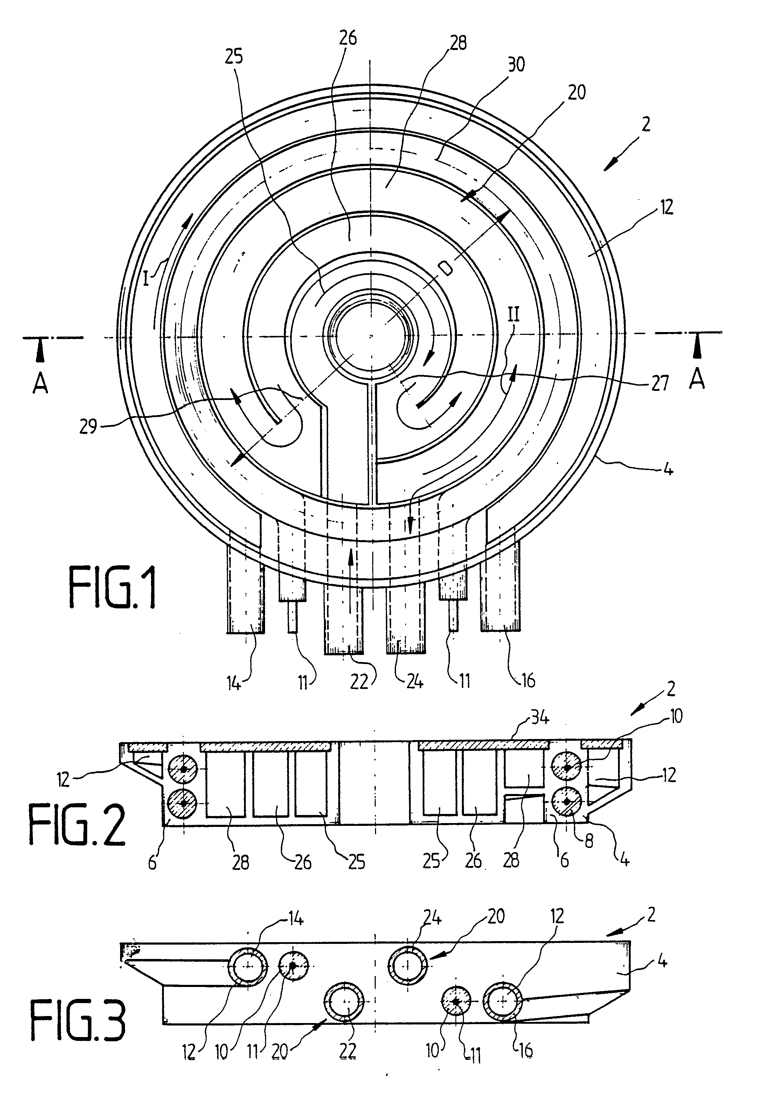

Zur Vermeidung von Wiederholungen wurden in den Fig. 1 bis 6 für entsprechend gleiche Bauteile Bezugszeichen gewählt.

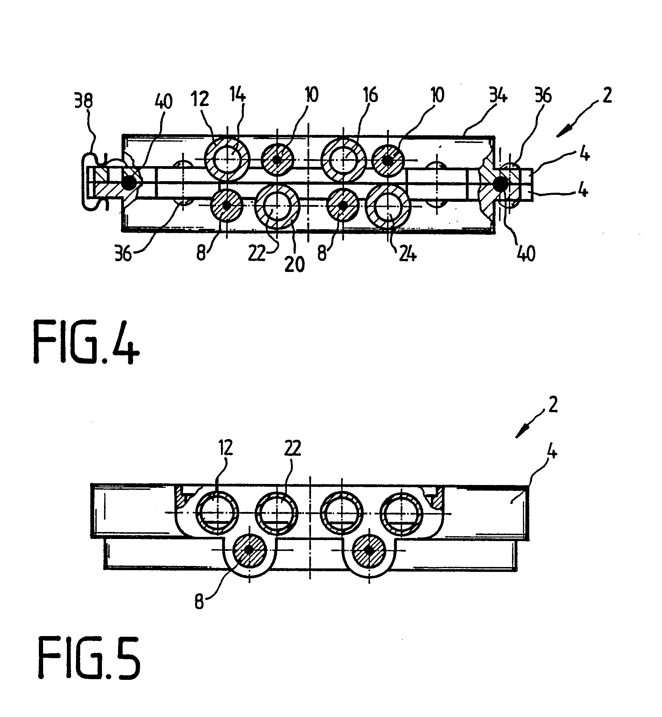

In den Fig. 1 bis 3 ist der plattenförmige Durchlauferhitzer mit 2 bezeichnet, der aus einem Gußgehäuse 4 aus Stahl, Aluminium oder sonstigem gut wärmeleitfähigem Material hergestellt sein kann. Das plattenförmige Gehäuse 4 weist nach Fig. 2 in seinen vertikal verlaufenden, ringförmigen Seitenwänden 6 zwei in einem Ringabschnitt 30 übereinander angeordnete Heizungen 8, 10 auf, die ringförmig bzw. gemäß Fig. 3 schraubenförmig ausgebildet sein können.

Wie aus Fig. 1 hervorgeht, sind die beiden oberen Anschlußverbindungen 11 der Heizung 10 mit Abstand nebeneinander angeordnet. Senkrecht unter diesen sind zwei weitere Steckverbindungen für die untere Heizung 8 vorgesehen, die aber in Fig. 1 nicht ersichtlich sind.

Die im Ausführungsbeispiel gemäß Fig. 1 und 2 dargestellten Heizungen 8, 10 können in Reihe, parallel zueinander oder einzeln unabhängig geschaltet sein. Sind beispielsweise die Heizungen 8, 10 parallel zueinander geschaltet und weisen eine Betriebsspannung von 220 V auf, ist es - wie aus der Elektrotechnik allgemein bekannt - möglich, diese einzelnen (halbe Leistung des Durchlauferhitzers) oder auch gemeinsam (volle Leistung des Durchlauferhitzers) zu betreiben. Durch einen in der Zeichnung nicht dargestellten Ein-/Ausschalter läßt sich ein mit zwei Heizungen von 110 V ausgerüsteter Durchlauferhitzer einmal mit 110 Volt und das andere Mal mit 220 Volt betreiben, indem so geschaltet wird, daß zum einen bei einer Hintereinanderschaltung zweier Heizungen der Durchlauferhitzer 2 mit 220 Volt beauf schlagt werden kann und daß zum anderen bei einer Parallelschaltung dieser Heizungen der Durchlauferhitzer nur mit 110 Volt beaufschlagt werden kann. Hierdurch wird dieselbe Heizvorrichtung universell sowohl in Europa (220 Volt) wie auch in USA (110 Volt) einsetzbar und ist daher auch kostengünstiger herzustellen und vermeidet für die verschiedenen Länder verschiedene Kaffeemaschinentypen. Weiterhin wird die Lagerhaltung der Durchlauferhitzer verringert.

Wie aus Fig. 2 hervorgeht, ist außerhalb der ringförmigen Heizung 8, 10 ein ringförmiger Wasserkanal 12 vorgesehen, der mit einem Wassereinlauf 14 und einem Wasserauslauf 16 ausgestattet ist. Der ringförmige Wasserkanal 12 weist vom Wassereinlauf 14 zum Wasserauslauf 16 ein kontinuierliches Gefälle I auf, so daß bei horizontal eingebautem Durchlauferhitzer 2 (Fig. 2) dadurch gewährleistet ist, daß nach abgeschlossenem Brühvorgang sämtliches Wasser aus dem Wasserkanal 12 abfließen kann. Dadurch wird ein Korrodieren des Wasserkanals 12 weitgehendst ausgeschlossen.

Konzentrisch zum Wasserkanal 12 und den Heizungen 8, 10 ist in Fig. 2 innenliegend ein ausschließlich zur Dampferzeugung vorgesehener Kanal 20 angeordnet, der aus einzelnen Kanalstücken 25, 26 und 28 besteht, die sich ringförmig radial hintereinander aneinderreihen. Die einzelnen Kanalstücke 25, 26, 28 sind an ihren Enden 27, 29 offen, und sie sind mit dem sich daran anschließenden Kanalstück 26 bzw. 28 verbunden. An das Ende des Kanalstücks 28 schließt sich der nach Fig. 1 nach unten geradlinig auslaufende Dampfauslaß 24 an.

Damit ausschließlich und in genügender Menge Dampf im Dampfkanal 20 erzeugt wird, muß die Wasserzufuhr in den Dampfkanal 20 durch eine Drosseleinrichtung (nicht dargestellt) gesteuert werden.

Wie aus Fig. 2 hervorgeht, liegt das mit dem Dampfeinlaß 22 verbundene Kanalstück 25 tiefer als der mit dem Kanalstück 28 verbundene Dampfauslaß 24. Hierdurch erhält man vom Dampfeinlaß 22 zum Dampfauslaß 24 eine kontinuierliche Steigung, so daß eine sehr gute Verdampfung mit geringem oder fast keinem Naßdampfanteil möglich ist. Der Dampf kann beispielsweise zur Zubereitung von Cappuccino oder zum Erwärmen eines kalten Getränks benutzt werden. Der dampfbildende Kanal 20 kann beispielsweise auch im Außenbereich der Heizung 8, 10 vorgesehen sein. In vorteilhafter Weise verläuft der Kanal 20 wie der Kanal 12 parallel zum Wasserkanal 12.

In Fig. 3 verläuft der Wasserkanal 12 von links nach rechts spiralförmig fallend, während der Dampfkanal 20 von links nach rechts schraubenförmig steigend verläuft.

Wie aus Fig. 2 hervorgeht, sind die Kanäle 20 und 12 nach oben hin mittels einer Abdeckplatte 34, die gleichzeitig Heizplatte ist, verschlossen.

Läßt man beispielsweise die Heizplatte 34 weg, so können zwei identisch ausgebildete Gehäuse - ein derartiger Durchlauferhitzer ist in der Zeichnung nicht dargestellt - spiegelbildlich zueinander zusammengefügt werden, um ein einteiliges Gehäuses für einen neuen Wasser- oder Durchlauferhitzer 2 zu bilden. Hierdurch wird der Gesamtquerschnitt der Kanäle 12, 20 und somit auch die Heizkapazität (vier Heizungen) wesentlich vergrößert. Die einzelnen Gehäuse können beispielsweise durch Nieten 36 bzw. Schrauben/Muttern (nicht dargestellt) oder auch durch Klammern 38 fest miteinander verbunden sein, wie dies Fig. 4 zeigt. Zur Abdichtung der gegeneinander aufliegenden Gehäuse ist eine Ringdichtung 40 zwischen den Oberflächen der Gehäuse 4 vorgesehen (Fig. 4). Andere Verbindungsverfahren wie Kleben, Schweißen, Pressen, etc. sind ebenfalls möglich.

Im Ausführungsbeispiel gemäß Fig. 3 weisen die Kanäle 12 und 20 den gleichen konstanten Querschnitt auf, sie verlaufen aber - um ein Gefälle I und II zu erhalten - schraubenförmig, ebenso wie die einzige Heizung 10.

Im Ausführungsbeispiel gemäß Fig. 4 liegen jeweils zwischen zwei diametral gegenüberliegenden Kanälen 12 bzw. 20 die einzelnen Heizungen 8 und 10. Da gemäß Fig. 4 ein Boden eines der Gehäuse 4 nunmehr nach oben gerichtet ist, dient dieser somit als Heizplatte 34 für ein Gefäß. Bei dieser Ausführung sind zwei mit jeweils geschlossenen Kanälen versehene Durchlauferhitzer 4 aufeinandergesetzt. Die einzelnen Durchlauferhitzer 4 weisen jeweils nur einen Kanal 12, 20 auf, so daß beispielsweise der obere als Dampf- und der untere als Wasserkanal oder auch umgekehrt benutzt werden kann. Bei einer hohen Dampf- bzw. Wasserförderung können auch die Kanäle 12, 20 als nur Dampf- oder Wasserkanäle benutzt werden.

Gemäß Fig. 5 kann zwischen jeweils zwei nebeneinanderliegenden Kanälen 12 und 20 des Durchlauferhitzers 2 zur Aufnahme von Wasser bzw. von Dampf eine Heizung 8 vorgesehen werden. Diese leigt in vorteilhafter Weise unterhalb und zwischen den Kanälen 12, 20.

## Ansprüche

1. Elektrischer Durchlauferhitzer (2) für eine Getränkezubereitungsmaschine, mit mindestens einer Heizung (8) und mindestens einem eine Höhendifferenz zwischen Wassereinlauf (14) und Wasserauslauf (16) aufweisenden, zum Aufheizen von Wasser dienenden Wasserkanal (12), der im eingebauten Zustand des Durchlauferhitzers im wesentlichen horizontal verläuft und der einen mit einem gegenüber dem Durchlauferhitzer höher gelegenen Wassertank in Verbindung stehenden Wassereinlauf und einen mit einem gegenüber dem Durchlauferhitzer höher gelegenen Ausflußrohr in Verbindung stehenden Wasserauslauf aufweist, wobei beim Erhitzen des Wassers im Durchlauferhitzer das Wasser vom Wassertank zum Ausflußrohr gefördert wird,
**dadurch gekennzeichnet,**
daß der Wasserkanal (12) vom Wassereinlauf (14) zum Wasserauslauf (16) ein Gefälle (I) aufweist.

2. Durchlauferhitzer nach Anspruch 1,
**dadurch gekennzeichnet,**
daß der Querschnitt des Wasserkanals (12) vom Wassereinlauf (14) zum Wasserauslauf (16) zunimmt.

3. Durchlauferhitzer nach dem Oberbegriff des Anspruchs 1,
**dadurch gekennzeichnet,**
daß zusätzlich zum Wasserkanal (12) im Durchlauferhitzer ein zum Erzeugen von Dampf dienender Dampfkanal (20) vorgesehen ist, der ein vom Auslauf (24) zum Einlauf (22) ausgebildetes Gefälle (II) aufweist.

4. Durchlauferhitzer nach Anspruch 3,
**dadurch gekennzeichnet,**
daß der Querschnitt des Dampfkanals (20) vom Einlaß (22) zum Auslaß (24) abnimmt.

5. Durchlauferhitzer nach Anspruch 3,
**dadurch gekennzeichnet,**
daß das Gefälle des dampfbildenden Kanals (20) vom Einlaß (22) zum Auslaß (24) kontinuierlich ansteigt.

6. Durchlauferhitzer nach Anspruch 3,
**dadurch gekennzeichnet,**
daß der Wasserkanal (12), der Dampfkanal (20) und die Heizung (8) konzentrisch zueinander verlaufen und daß der Wasserkanal (12) radial außerhalb der Heizung (8) und der Dampfkanal (20) radial innerhalb der Heizung (8) kreis- bzw. U-förmig verläuft.

7. Durchlauferhitzer nach einem der Ansprüche 1 bis 6,
**dadurch gekennzeichnet,**
daß zusätzlich zur ersten Heizung (8) mindestens eine weitere Heizung (10) vorgesehen ist und daß die Heizungen (8, 10) ringförmig ausgebildet sind.

8. Durchlauferhitzer nach Anspruch 7,
**dadurch gekennzeichnet,**
daß die Heizungen (8, 10) kreis- bzw. U-förmig und übereinander verlaufen und daß beide Heizungen (8, 10) etwa den gleichen Durchmesser (D) aufweisen.

9. Durchlauferhitzer nach einem der vorhergehenden Ansprüche,
**dadurch gekennzeichnet,**
daß die Heizung (8, 10) ringförmig ausgebildet ist, daß der Mantel der Heizung (8, 10) aus Aluminium besteht, daß die Heizung (8, 10) während der Herstellung des im Spritzgußverfahren gegossenen Gehäuses (4) mit eingesetzt ist und daß das Gehäuse (4) ebenfalls aus Aluminium besteht.

10. Durchlauferhitzer nach Anspruch 6,
**dadurch gekennzeichnet,**
daß der Einlaß (22) des Dampfkanals (20) zunächst von außen bis etwa zur Mitte des Wassererhitzers (2) verläuft und von dort in mehreren, konzentrisch zur Mitte des Durchlauferhitzers und radial hintereinander U-förmig verlaufenden Abschnitten (25, 26, 28) zum Auslaß (24) gelangt.

11. Durchlauferhitzer nach Anspruch 10,
**dadurch gekennzeichnet,**
daß die Abschnitte (25, 26, 28) in Draufsicht auf den Wassererhitzer (2) nierenförmig ausgebildet sind.

12. Durchlauferhitzer nach Anspruch 1 oder 3,
**dadurch gekennzeichnet,**
daß die Heizungen (8, 10) in das von den Kanälen (12, 20) gebildeten Gehäuse (4) integriert sind und daß die Kanäle nach oben hin offen und durch einen Deckel bzw. durch eine Abstellplatte (34) verschlossen sind.

13. Durchlauferhitzer nach Anspruch 1 oder 3,
**dadurch gekennzeichnet,**
daß zur Vergrößerung des Querschnittes der Kanäle (12, 20) zwei Durchlauferhitzer (2) ohne Deckel (34) spiegelbildlich aufeinanderaufsetzbar und dichtbar sind und daß die Wasserein- und ausläufe (14, 16 bzw. 14, 16, 22, 24) und die Heizungen (8 bzw. 8, 10) derart miteinander verbunden werden, daß wiederum ein einziger Wassererhitzer (2) entsteht.

14. Durchlauferhitzer nach einem der vorhergehenden Ansprüche,
**dadurch gekennzeichnet,**
daß zwei oder mehrere Heizstäbe (8) bzw. Heizspiralen einzeln, gemeinsam, parallel oder in Reihe betreibbar sind.

15. Durchlauferhitzer nach Anspruch 3,
**dadurch gekennzeichnet,**
daß auf der Oberseite des Wassererhitzers (2) die Wasserkanäle (12) und auf der Unterseite des Durchlauferhitzers die Dampfkanäle (20) ausgebildet sind und daß zwischen den Wasser- und Dampfkanälen (12, 20) die Heizung (8) ausgebildet ist.

16. Durchlauferhitzer nach Anspruch 3,
**dadurch gekennzeichnet,**
daß am Dampfauslaß eine Düse vorgesehen ist.

17. Durchlauferhitzer nach Anspruch 16,
**dadurch gekennzeichnet,**
daß die Düse an dem zur Erhitzung eines Getränks eintauchenden Ende vorgesehen ist, daß sich der Querschnitt der Düse zum freien Ende hin kegelförmig verjüngt und daß die Mantelfläche des Kegels einen Winkel von 16° bis 20° einschließt.

18. Durchlauferhitzer nach Anspruch 3,
**dadurch gekennzeichnet,**
daß der Querschnitt des Dampfkanals so eng bemessen ist, daß eine ausreichende Dampfmenge erzeugt wird.

FIG.1

FIG.2

FIG.3

FIG.4

FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | DE-A-2 258 897 (R. KRUPS) <br><br> * Seite 6, Zeile 16 - Seite 7, Zeile 4; Figuren 1-3 * | 1 | A 47 J 31/54 <br> A 47 J 31/057 |
| Y | | 2,7,8, 9,12, 14 | |
| | -- | | |
| Y,D | DE-B-2 437 775 (WIGO GOTTLOB WIDMANN) <br><br> * Insgesamt * | 2 | |
| | -- | | |
| Y | DE-A-2 701 692 (CERU ELEKTROWÄRME-GESELLSCHAFT CZEPEK & CO.) <br><br> * Seite 6, Zeile 11 - Seite 7, Zeile 9; Figuren 1-4 * | 7,8 | |
| | -- <br> ./. | | |

RECHERCHIERTE SACHGEBIETE (Int. Cl.4)

A 47 J
F 24 H

## MANGELNDE EINHEITLICHKEIT DER ERFINDUNG

Nach Auffassung der Recherchenabteilung entspricht die vorliegende europäische Patentanmeldung nicht den Anforderungen an die Eintheitlichkeit der Erfindung; sie enthält mehrere Erfindungen oder Gruppen von Erfindungen, nämlich:

1. Ansprüche 1,2,7-9,12-14: Durchlauferhitzer für Kaffeemaschine mit Steigleitung und Gefälle im Wasserkanal

2. Ansprüche 1,3-6,10,11,15-18: (Insofern verbunden mit Anspruch 1). Dampferziehung im Durchlauferhitzer für Kaffeemaschine mit Steigleitung.

Der vorliegende europäische Teilrecherchenbericht wurde für die Teile der Anmeldung erstellt, die sich auf die zuerst in den Patentansprüchen erwähnte Erfindung beziehen.

| Recherchenort | Abschlußdatum der Recherche | Prüfer |
|---|---|---|
| Den Haag | 03-11-1989 | MEINDERS |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | DE-A-2 010 675 (SPERRY RAND CORP.)<br><br>* Seite 7, Zeilen 7-15; Figuren 7,11 * | 9,12 | |
| Y | DE-U-8 715 898 (SIEMENS AG)<br><br>* Zusammenfassung * | 14 | |
| A | EP-A-0 224 041 (RHEINISCH-WESTFÄLISCHES ELEKTRIZITÄTSWERK AG)<br><br>* Insgesamt * | 1 | |
| A | DE-A-3 509 609 (DÜRR-DENTAL GmbH)<br><br>* Seite 10, Zeilen 6-13; Figuren 1,2,7 * | 1 | RECHERCHIERTE SACHGEBIETE (Int. Cl.4) |
| A | FR-A-2 299 839 (MOULINEX)<br><br>* Figuren 2,3 * | 1 | |

Der vorliegende Recherchenbericht wurde für alle Patentansprüche erstellt.

| Recherchenort | Abschlußdatum der Recherche | Prüfer |
|---|---|---|
| | | |